# EUROPEAN PATENT SPECIFICATION

(11) **EP 2 305 394 B1**
(45) Date of publication and mention of the grant of the patent: **26.12.2012**
(21) Application number: 10178192.0
(22) Date of filing: 22.09.2010
(51) Int. Cl.: B21D 22/26, B21D 53/88, B62D 25/14

(54) **Method of forming dash panel for vehicle**
Verfahren zur Formung einer Trennwand für ein Fahrzeug
Procédé de formation de tablier de véhicule

(30) Priority: 30.09.2009 JP 2009226603
(43) Date of publication of application: 06.04.2011
(73) Proprietor: Mazda Motor Corporation, Aki-gun, Hiroshima 730-8670 (JP)
(72) Inventor: Yamauchi, Kazuki, Hiroshima 730-8670 (JP); Hashimoto, Takanori, Hiroshima 730-8670 (JP); Miyamoto, Yoshihiro, Hiroshima 730-8670 (JP)
(74) Representative: Herrmann, Uwe

(56) References cited:
- EP-A1- 0 494 562
- EP-A1- 1 920 999
- EP-A2- 1 762 469
- DE-C1- 4 409 081

## Description

### BACKGROUND OF THE INVENTION

### 1. Field of the invention

The present invention relates to a method of forming a dash panel for a vehicle.

### 2. Description of the Background Art

As a dash panel for a vehicle, there has been known a type which has a panel body portion made of a light alloy and formed to extend in one direction and a pair of housing curved portions made of steel and each provided on a respective one of opposite sides of the panel body portion in a longitudinal direction of the panel body portion (a lateral direction of a vehicle body) to define a rear region of a wheel (tire) house, as disclosed, for example, in JP 2008-120231A. In this type of dash panel, the panel body portion is made of a light alloy, so that it becomes possible to facilitate a reduction in weight of a vehicle body.

Meanwhile, in some cases, a dash panel is formed by subjecting a single sheet of blank plate to drawing to integrally form therein a panel body portion, and a pair of housing curved portions each located on a respective one of longitudinally opposite sides of the panel body portion to define a rear region of a wheel house.

However, as a prerequisite to allowing a dash panel to be formed as a single-piece structure from a blank plate by a drawing process in the above manner, it is necessary to employ a deep-drawing process involving a material flow. In this case, the blank plate is required to have a size (area) set by taking into account the material flow involved in the deep-drawing process. Thus, a blank plate for use in forming a dash panel must be prepared in a size (area) fairly greater than that of the intended dash panel, which is undesirable in terms of a usage amount of the blank plate (material).

### SUMMARY OF THE INVENTION

In view of the above circumstances, it is a technical object of the present invention to provide a vehicle dash panel forming method capable of reducing a size of a blank plate required for forming a dash panel.

In order to achieve the above technical object, the present invention provides a method of forming a dash panel which has a panel body portion extending in a lateral direction of a vehicle body, and a pair of housing curved portions each provided on a respective one of right and left sides of the panel body portion to define a rear region of a wheel house, through drawing of a blank plate. The method is **characterized in that** it comprises: a drawing step of subjecting the blank plate to the drawing to form therein the panel body portion, and a pair of bulge-shaped portions located on respective ones of the right and left sides of the panel body portion as elements corresponding to the housing curved portions; and a bending step of, after the drawing step, subjecting the bulge-shaped portions to bending to bend the bulge-shaped portions with respect to the panel body portion to form the housing curved portions by the bent bulge-shaped portions.

In the method of the present invention, the housing curved portion is formed by a combination of a drawing process and a bending process for bending the bulge-shaped portions. Thus, a shallow-drawing process can be employed as the drawing process, instead of a deep-drawing process. In the shallow-drawing process, a material flow of a blank plate can be suppressed as compared with the deep-drawing process, so that it becomes possible to reduce a size (area) of the blank plate required for forming the dash panel.

Preferably, in the method of the present invention, the drawing step includes forming each of the bulge-shaped portions on a respective one of the right and left sides of the panel body portion to have a shape which gradually protrudes downwardly as extending outwardly in the lateral direction of the vehicle body. The bending step includes setting a bending line between the panel body portion and each of the bulge-shaped portions to extend obliquely downwardly and inwardly in the lateral direction of the vehicle body, and subjecting the bulge-shaped portions to the bending along corresponding ones of the bending lines to form the housing curved portions by the bent bulge-shaped portions.

This makes it possible to form the housing curved portions easily and adequately.

Preferably, in the method of the present invention, the bending step includes forming at least a part of a plurality of flanges to be provided in the panel body portion, concurrently with the bending.

This makes it possible to suppress an increase in the number of steps.

Preferably, the method of the present invention further comprises the step of, after the bending step, forming a flange along a peripheral edge of each of the housing curved portions, and forming a flange having the same bending direction as that of the flange of the housing curved portion, in the panel body portion.

In this case, a flange which is unable to be formed concurrently with the bending of the bent bulge-shaped portions (formation of the housing curved portions) can be adequately formed along the peripheral, edge of the housing curved portion after the bending step, and a flange having the same bending direction as that of the flange of the housing curved portion can be simultaneously formed. This makes it possible to suppress an increase in the number of steps and facilitate the formation of the flanges.

Preferably, in the method of the present invention, the blank plate has a central portion for forming the panel body portion, a pair of lateral portions provided on respective ones of right and left sides on the central portion and each including a protruding region protruding from one of widthwisely opposite sides of the blank plate with respect to the central portion, and a recess defined between the pair of protruding regions. The method further comprises the steps of: preparing a strip-shaped raw material including two rows each consisting of a longitudinal series of the blank plates; and cutting the blank plate from the raw material in a positional relationship where the two protruding regions of adjacent ones of the blank plates in one of the rows are fitted in the recess of one of the blank plates in the other row.

In this case, a width of the raw material can be narrowed to reduce a usage amount of the raw material, for example, as compared with a technique of cutting a blank plate devoid of the recess (oblong-shaped blank plate) from a raw material. This makes it possible to enhance a yield of a blank plate with respect to a raw material.

### BRIEF DESCRIPTION OF THE DRAWINGS

FIG. 1 is a perspective view showing a vehicle body frame assembled with a dash panel according to one embodiment of the present invention.

FIG. 2 is a perspective view showing the dash panel according to the embodiment.

FIG. 3 is a diagram of the dash panel according to the embodiment, when viewed from the side of a front surface thereof.

FIG. 4 is a right side view of the dash panel in FIG. 3.

FIG. 5 is a process chart showing a dash panel forming method.

FIG. 6 is an explanatory diagram illustrating a blank cutting step.

FIG. 7 is an explanatory diagram illustrating a conventional blank cutting step.

FIG. 8 is an explanatory diagram illustrating a shallow-drawing step.

FIG. 9 is an explanatory diagram illustrating a trimming/piercing step.

FIG. 10 is an explanatory diagram illustrating a shallow-drawing process and a bending process for a bulge-shaped portion.

FIG. 11 is an explanatory diagram showing a region to be subjected to a bending and first flange-forming step.

FIG. 12 is an explanatory diagram showing a region to be subjected to a second flange-forming step.

FIG. 13 is an enlarged sectional view taken along the line XIII-XIII in FIG. 3.

### DESCRIPTION OF THE PREFERRED EMBODIMENTS

With reference to the drawings, the present invention will now be described based on one embodiment thereof.

FIG, 1 shows a vehicle body frame 2 assembled with a dash panel 1 according to this embodiment. The dash panel 1. included in the vehicle body frame 2 is installed to extend in a lateral (widthwise) direction of a vehicle body while orienting opposite surfaces thereof, respectively, in frontward and rearward directions of the vehicle body, to divine between an engine compartment and a passenger compartment. Each of a pair of dash side panels 3 is joined (connected) to a respective one of right and left ends of the dash panel 1 to make up a part of a respective one of right and left front pillars. Further, a cowl top member 4 is provided at an upper end of the dash panel 1 to extend in the lateral direction of the vehicle body, and a floor panel 5 is provided at a lower end of the dash panel 1.

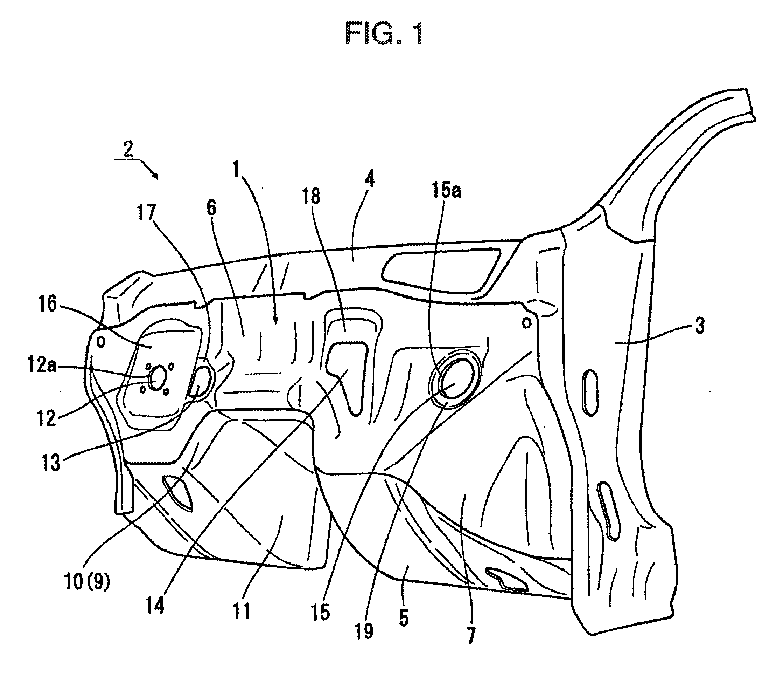

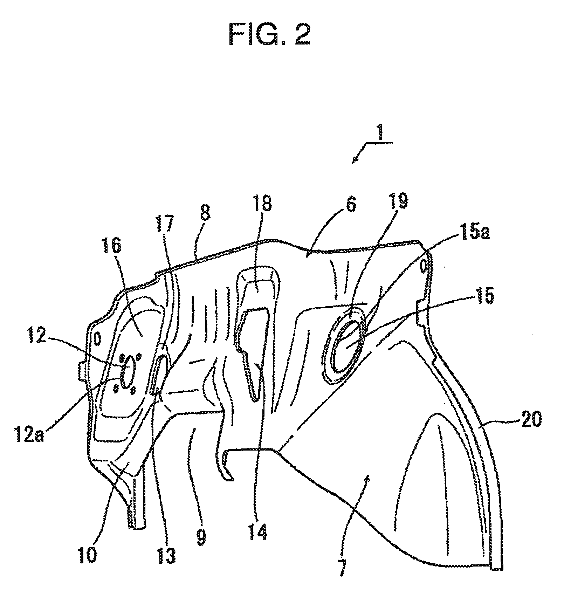

As shown in FIGS. 1 to 4, the dash panel 1 has a panel body portion 6 extending in the lateral direction of the vehicle body, and a pair of right and left housing curved portions 7 each integrally provided on a respective one of right and left sides (laterally opposite sides) of the panel body portion 6 to define a rear region of a wheel (tire) house. The panel body portion 6 extends in one direction (the lateral direction) with an approximately constant width in an upward-downward direction. The panel body portion 8 has a flange 8 formed along an upper edge thereof. The flange 8 is bent in the frontward direction of the vehicle body to extend over the overall length of the upper edge of the panel body portion 6. The flange 8 is adapted to allow the cowl top member 4 to be joined (connected) thereto. The panel body portion 6 also has a recess 9 formed in a laterally central region of a lower edge thereof to have an upwardly concave shape corresponding to a tunnel portion 11 of the floor panel 5. A flange 10 is formed along a peripheral edge of the recess 9. The flange 10 is bent in the rearward direction of the vehicle body to allow a front end of the tunnel portion 11 to be joined thereto. A remaining region of the lower edge of the panel body portion 6 other than the recess 9 is adapted to allow a front end (of a remaining portion other than the tunnel portion 11) of the floor panel 5 to be joined thereto.

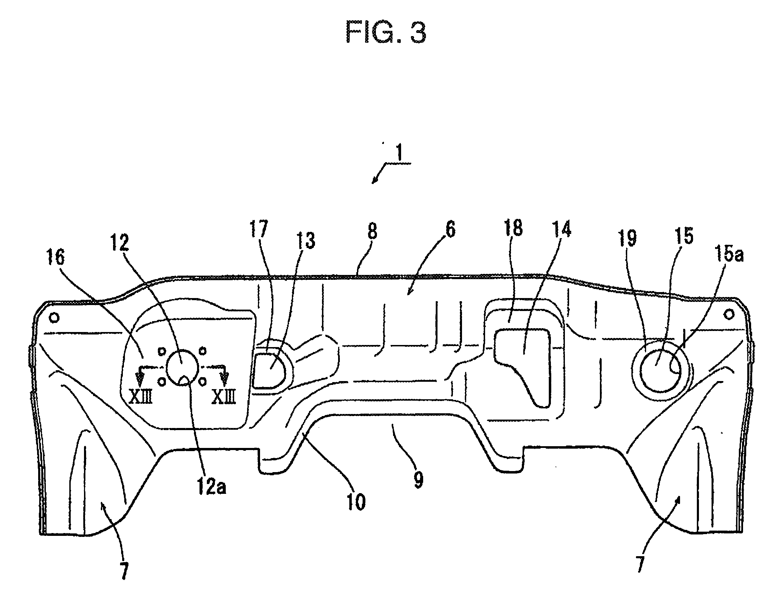

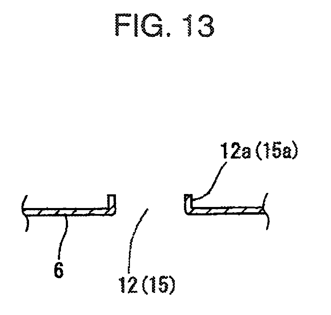

The panel body portion 6 is formed with a plurality of through-holes 12 to 15 in spaced apart relation to each other in the lateral direction. Among them, each of the through-holes 12, 15 is formed to have a circular-shaped opening, and flanges 12a, 15a are formed along respective peripheral edges of the through-holes 12, 15. Each of the flanges 12a, 15a is bent toward a rear surface side of the panel body portion 6 (rearwardly with respect to the drawing sheet of FIG. 3), as shown in FIG. 13. Further, the panel body portion 6 has a plurality of depressions 16 to 19 formed around respective ones of the through-holes 12 to 15. Each of the depressions 16 to 19 is slightly concaved toward the rear surface side of the panel body portion 6, in such a manner that an area thereof in planar view becomes greater than that of the opening of a corresponding one of the through-holes 12 to 15.

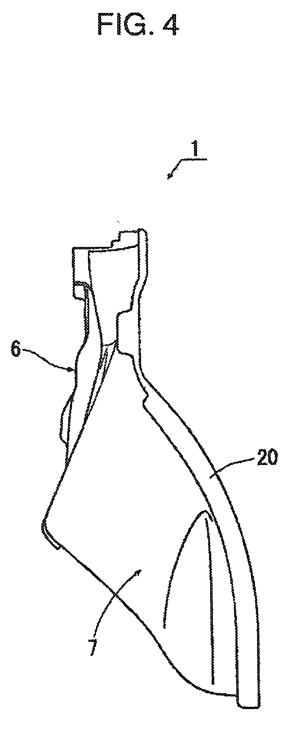

As shown in FIGS. 1 to 4, the right and left housing curved portions 7 are provided at two, right and left, positions sandwiching the panel body portion 6 therebetween from the outside in the lateral direction (on the right and left sides of the panel body portion 6), and curved to gradually bulge in the rearward direction of the vehicle body (in FIG. 4, rightwardly) and downwardly as extending outwardly in the lateral direction of the vehicle body. Each of the housing curved portions 7 is adapted to define a rear space of the wheel house for receiving therein a front wheel. As shown in FIGS, 2 and 4, a laterally outwardmost portion of the housing curved portion 7 extends to a position below the lower end of panel body portion 6, while being curved to gradually protrude in the rearward direction of the vehicle body as extending downwardly. Each of the housing curved portions 7 has a flange 20 formed along an outer edge (peripheral edge) thereof. The flange 20 is bent in the frontward direction of the vehicle body to allow the dash side panel 3 to be joined thereto.

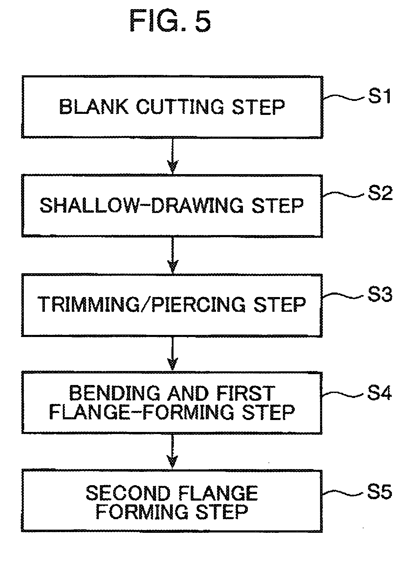

In this embodiment, the above dash panel is formed according to the process chart illustrated in FIG. 5.

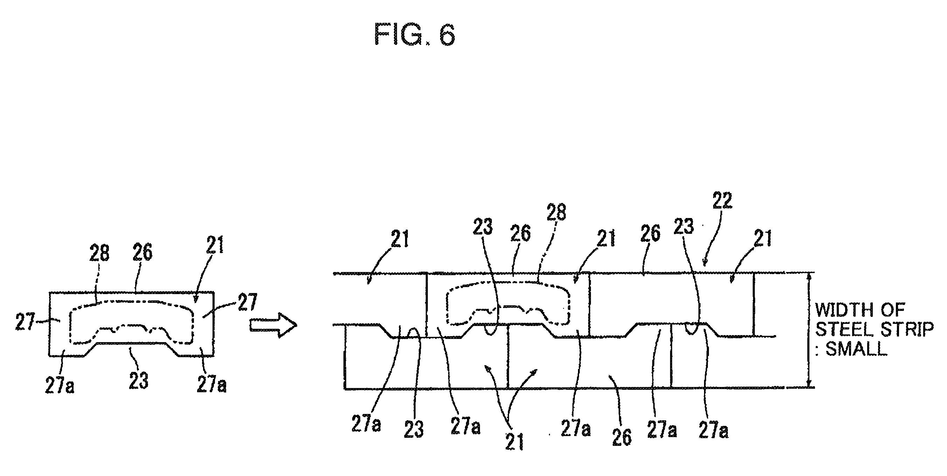

Firstly, as shown in S1 of FIG. 5 and in FIG. 6, a blank cutting step is performed. The blank cutting step is intended to cut a blank plate 21 having a size (area) capable of forming a single sheet of the dash panel 1, from a steel strip 22 (raw material). Each of the blank plates 21 cut in this step has a central portion 26 for forming the panel body portion 6, a pair of lateral portions 27 provided on respective ones of longitudinally opposite sides on the central portion 26 and each including a protruding region 27a protruding from one of widthwisely opposite sides of the blank plate with respect to the central portion 26, and a recess 23 defined between the pair of protruding regions 27a, More specifically, the blank plate 21 is a plate having a longitudinal dimension slightly greater than a length of the dash panel 1 (a total length of the panel body portion 6 and the right and left housing curved portions 7) in the lateral direction of the vehicle body, wherein it has a recess 23 formed in a longitudinally central region thereof and on one of widthwisely opposite sides thereof in such a manner as to be concaved inwardly (toward the other side), and a pair of right and left protruding regions 27a protruding to define the recess 23. Based on using the blank plate 21 with the recess 23, a size of the blank plate 21, i.e., a material usage amount required for forming a single sheet of the dash panel 1, can be reduced. The blank plate 21 can be formed in the above shape, because, in this embodiment designed to form the dash panel 1 by a combination of a shallow-drawing process and a bending process as described later, there is no need to take into account a material flow, differently from a method designed to form the dash panel 1 by a deep-drawing process.

As shown in FIG. 6, the blank plate 21 is cut from a strip-shaped steel strip 22 including two rows of the blank plates 21. More specifically, two rows each consisting of a longitudinal series of the blank plates 21 are included in the steel strips 22, and the blank plates 21 in one of the rows are arranged such that the recesses 23 thereof are oriented toward the other row. In an (blank cutting) operation of cutting the blank plate 21 from the steel strip 22, the blank plate 21 is cut in a positional relationship where the two protruding regions 27a of adjacent ones of the blank plates 21 in one of the rows are fitted in the recess 23 of one of the blank platens 21 in the other row.

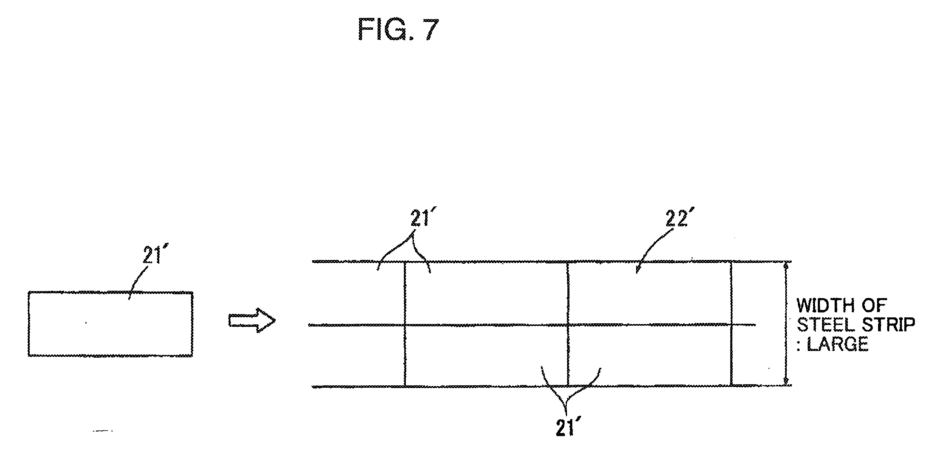

This makes it possible to reduce a width of the steel strip 22 as compared with a conventional blank cutting technique as shown in FIG. 7. Specifically, in cases where a steel strip 22' including two row of blank plates 21' each having an oblong shape is prepared as in the conventional technique illustrated in FIG. 7, a width of the two rows of the oblong-shaped blank plates 21' is required as a width of the steel strip 22'. In contrast, as shown in FIG. 6, in cases where the steel strip 22. including two rows of the blank plates 21 each having the recess 23 is prepared as in this embodiment, a width of the steel strip 22 is narrowed as compared with the steel strip intended to cut the oblong-shaped blank plate 21' (FIG. 7). This makes it possible to narrow a width of the steel strip 22 to reduce a material usage amount and thus enhance a yield of the blank plate 21 with respect to the steel, strip 22.

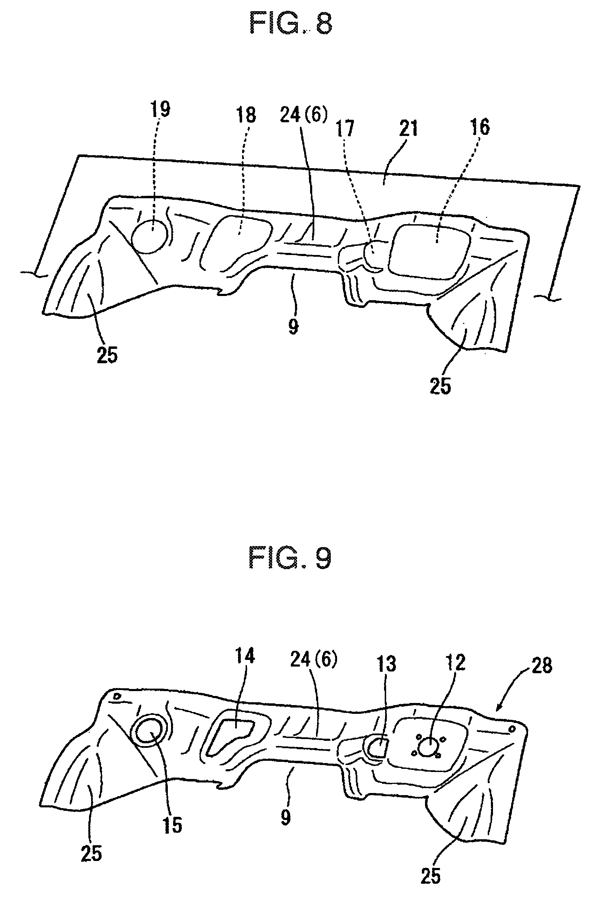

Then, as shown in S2 of FIG. 5 and in FIG. 8, a shallow-drawing step is performed. In the shallow-drawing step, the blank plate 21 (the central portion 25 and the lateral portions 27) is subjected to shallow-drawing (pressing) using a pressing machine. Through the shallow-drawing step, the flat-shaped blank plate 21 (FIG. 6) is formed into a shape having a panel-shaped portion 24 corresponding to the panel body portion 6 of the dash panel 1, and a pair of bulge-shaped portions 25 corresponding the housing curved portion 7 of the dash panel 1. In FIG. 6, a portion of the blank plate 21 to be formed into the panel-shaped portion 24 and the bulge-shaped portions 25 is illustrated as a dash panel-corresponding portion 28.

At a time when the shallow-drawing step is completed, the panel-shaped portion 24 is formed in a shape close to that of the panel body portion 6, i.e., the panel-shaped portion 24 already has the aforementioned depressions 16 to 19, etc. Thus, in the following description, the panel-shaped portion 24 will be referred to as "panel body portion 6", without particularly distinguishing between the panel-shaped portion 24 and the panel body portion 6,

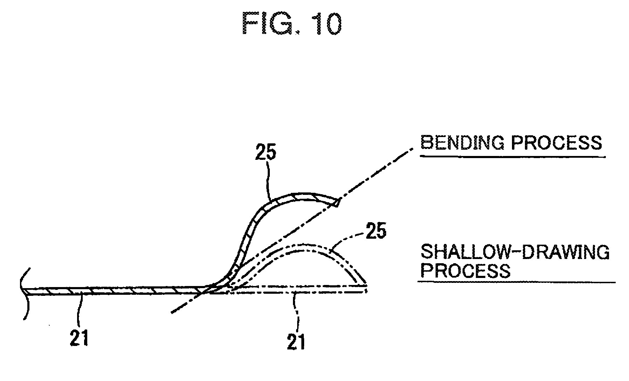

Each of the bulge-shaped portions 25 is formed into a shape which is curved to bulge toward the rear surface, side of the blank plate 21 (forwardly with respect to the drawing sheet of FIG. 8 or FIG. 9) (additionally see the two-dot chain line in FIG. 10). Further, each of the bulge-shaped portions 25 is provided on a respective one of longitudinally opposite sides (right and left sides) of the panel body portion 6 to gradually protrude in one of widthwisely opposite sides (in FIGS. 8 and 9, downwardly) as extending away from the panel body portion 6. In a state after the dash panel 1 is completed and attached to the vehicle body, the longitudinal direction of the panel body portion 6 is aligned with the lateral direction of the vehicle body, and a protruding direction of the bulge-shaped portions 25 is aligned with a downward direction. Based on this arrangement, a shape of the bulge-shaped portions 25 may be expressed as follows: Each of the bulge-shaped portions 25 gradually protrudes downwardly as extending outwardly in the lateral direction of the vehicle body. The following description about subsequent steps will also be fundamentally made on an assumption that the longitudinal direction of the panel body portion 6 is the lateral direction of the vehicle body, and the protruding direction (one of the widthwisely opposite sides of the panel body portion 6) direction of the bulge-shaped portions 25 (housing curved portion 7) is the downward direction, based on the state after the completion of the dash panel 1 (usage state of the dash panel 1).

Then, as shown in S3 of FIG. 5 and in FIG. 9, a trimming/piercing step is performed. In the trimming/piercing step, the dash panel-corresponding portion 28 (the panel body portion 6 and the bulge-shaped portions 25) is cut out from the shallow-drawn blank plate 21, and the aforementioned through-holes 12 to 15 are formed in the panel body portion 6. In this case, it is obviously preferable that the blank plate 21 is formed in a shape possibly close to that of the dash panel-corresponding portion 28.

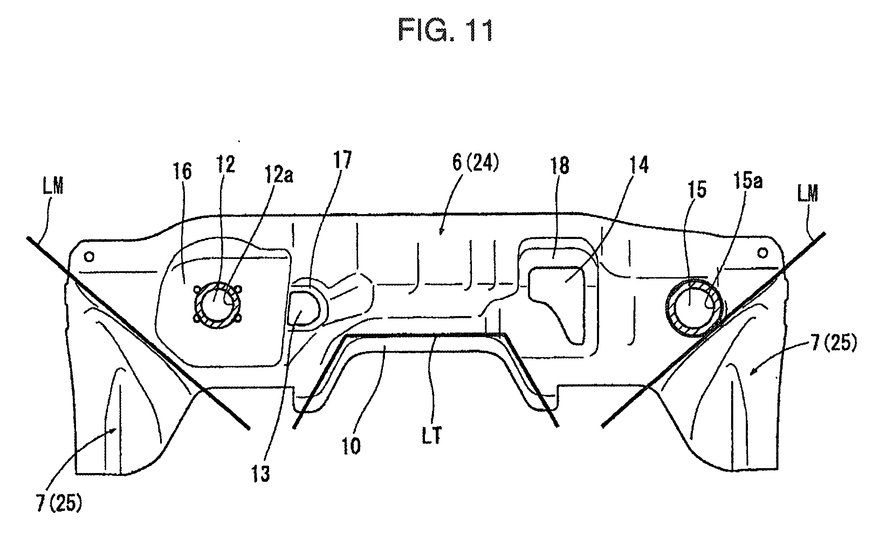

Then, as shown in S4 of FIG. 5 and in FIG. 11, a bending and first flange-forming step is performed, In this step, the bending is a process of bending the right and left bulge-shaped portions 25 toward the rear surface side of the panel body portion 6 with respect to the panel body portion 6 by a pressing machine to form the housing curved portions 7 by the bent bulge-shaped portions 25. In this case, as indicated by each of the right and left thick lines in FIG. 11 (illustrating a state after the bending process), a bending line LM during the bending process is set between the panel body portion 6 and each of the bulge-shaped portions 25 (housing curved portions 7) to extend obliquely downwardly and inwardly in the lateral direction of the vehicle body. During the bending process, the bulge-shaped portions 25 can be formed into the housing curved portions 7 simply by bending the bulge-shaped portions 25 along corresponding ones of the bending lines LM.

Concurrently, the peripheral edge of the recess 9 is subjected to the bending. Specifically, the peripheral edge of the recess 9 is bent toward the rear surface side of the panel body portion 6, and the bent edge is formed as the aforementioned flange 10. The thick line LT on a lower side of FIG. 11 indicates a bending line along which the peripheral edge of the recess 9 is to be bent.

In the first flange-forming process to be performed concurrently with the bending process, the aforementioned flanges 12a, 15a are formed along respective peripheral edges of the through-holes 12, 15. As shown in FIG. 13, each of the flanges 12a, 15a is formed to protrude toward the rear surface side of the panel body portion 6. The hatched regions along the respective peripheral edges of the through-holes 12, 15 in FIG. 11 indicate respective forming areas of the flanges 12a, 15a. Based on forming the flanges 12a, 15a concurrently with the bending process, an increase in the number of steps can be suppressed.

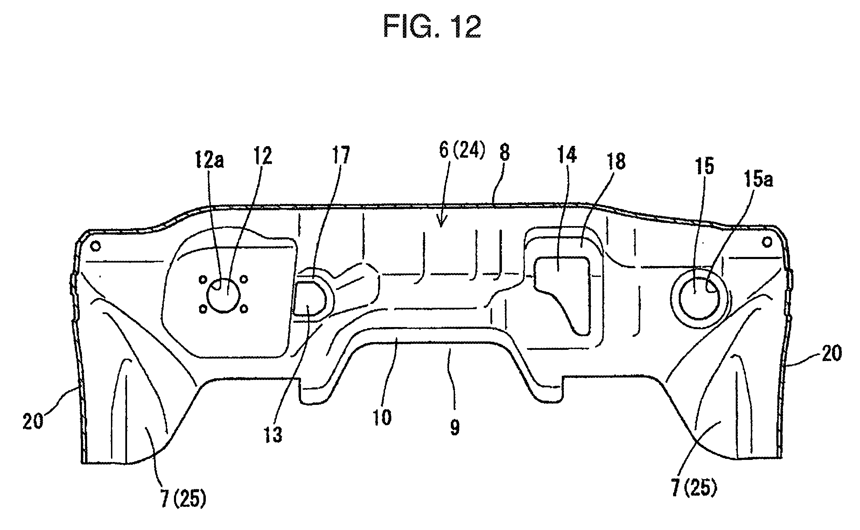

Then; as shown in S5 of FIG. 5 and in FIG. 12, a second flange-forming step is performed. In the second flange-forming step, the outer edge (peripheral edge) of each of the housing curved portions 7, and the upper edge of the panel body portion 6, are bent toward the front surface side of the panel body portion 6 to form the aforementioned flanges 8, 20. Specifically, the flange 20 of each of the housing curved portions 7 to be bent in a direction different from a bending direction during the bending process for the bulge-shaped portions 25 (housing curved portions 7) (i.e., to be bent toward the front surface of the panel body portion 6) has to be formed after the bending process, because it cannot be formed concurrently with the bending process for the bulge-shaped portions 25. On the other hand, the flange 8 of the panel body portion 6 to be bent in the same direction as that of the flange 20 can be formed concurrently with the flange 20. Thus, in view of enhancing operating efficiency, the flange 8 and the flange 20 are simultaneously formed. The hatched regions in FIG. 12 indicate respective forming areas of the flanges 8, 20.

As described above, in the forming method according to this embodiment, instead of forming the dash panel 1 at once only by a deep-drawing process, the dash panel 1 is formed by a combination of a drawing process and a bending process, so that it becomes possible to employ a shallow-drawing process as the drawing process to suppress a material flow of the blank plate 21. Thus, as shown in FIG. 6, in the blank plate 21, a material flow between the right and left lateral portions 27 corresponding to the bulge-shaped portions 25 can be suppressed, so that, even if the recess 23 is formed between the lateral portions 27, a deficiency of material will never occur. This makes it possible to reduce a size of the blank plate 21, i.e., a material usage amount required for forming a single sheet of the dash panel 1, and to efficiently cut the blank plate 21 from the steel strip 22 (see FIGS. 6 and 7), as mentioned above.

## Claims

1. A method of forming a dash panel (1) which has a panel body portion (6) extending in a lateral direction of a vehicle body, and a pair of housing curved portions (7) each provided on a respective one of right and left sides of the panel body portion (6) to define a rear region of a wheel house, through drawing of a blank plate (21), **characterized in that** it comprises:
a drawing step of subjecting the blank plate (21) to the drawing to form therein the panel body portion (6), and a pair of bulge-shaped portions (25) located on respective ones of the right and left sides of the panel body portion (6) as element corresponding to the housing curved portions (7); and
a bending step of, after the drawing step, subjecting the bulge-shaped portions (25) to bending to bend the bulge-shaped portions (25) with respect to the panel body portion (6) to form the housing curved potions (7) by the bent bulge-shaped portions (25).

2. The method as defined in claim 1, wherein:
the drawing step includes forming each of the bulge-shaped portions (25) on a respective one of the right and left sides of the panel body portion (6) to have a shape which gradually protrudes downwardly as extending outwardly in the lateral direction of the vehicle body; and
the bending step includes setting a bending line (LM) between the panel body portion (6) and each of the bulge-shaped portions (25) to extend obliquely downwardly and inwardly in live lateral direction of the vehicle body, and subjecting the bulge-shaped portions (25) to the bending along corresponding ones of the bending lines (LM) to form the housing curved portions (7) by the bent bulge-shaped portions (25).

3. The method as defined in claim 1 or 2, wherein the bending step includes forming at least a part (12a, 15a) of a plurality of flanges to be provided in the panel body portion (6), concurrently with the bending.

4. The method as defined in claim 1 or 2, further comprising the step of, after the bending step, forming a flange (20) along a peripheral edge of each of the housing curved portions (7), and forming a flange (8) having a same bending direction as that of the flange (20) of the housing curved portion (7), in the panel body portion (6).

5. The method as defined in any one of claims 1 to 4, wherein:
the blank plate (21) has: a central portion (26) for forming the panel body portion (6); a pair of lateral portions (27) provided on respective ones of right and left sides on the central portion (26) and each including a protruding region (27a) protruding from one of widthwisely opposite sides of the blank plate with respect to the central portion (26); and a recess (23) defined between the pair of protruding regions (27a),
the method further comprises the steps of: preparing a strip-shaped raw material (22) including two rows each consisting of a longitudinal series of the blank plates (21); and cutting the blank plate (21) from the raw material (22) in a positional relationship where the two protruding regions (27a) of adjacent ones of the blank plates (21) in one of the rows are fitted in the recess (23) of one of the blank plates (21) in the other row.

## Patentansprüche

1. Verfahren zum Bilden einer Spritzwand (1), welche einen Wandkorpusabschnitt (6), der sich in einer Seitenrichtung einer Fahrzeugkarosserie erstreckt, und ein Paar von geschwungenen Gehäuseabschnitten (7), die jeweils an einer jeweiligen einer rechten und linken Seite des Wandkorpusabschnitts (6) vorgesehen sind, um einen hinteren Bereich eines Radkastens festzulegen, aufweist, durch Ziehen eines Formblechs (21), **dadurch gekennzeichnet, dass** es umfasst:
einen Ziehschritt, bei dem das Formblech (21) dem Ziehen unterzogen wird, um darin den Wandkorpusabschnitt (6) und ein Paar von wulstförmigen Abschnitten (25), die sich an jeweiligen der rechten und linken Seite des Wandkorpusabschnitts (6) befinden, als Elemente, die den geschwungenen Gehäuseabschnitten (7) entsprechen, zu bilden; und
einen Biegeschritt, bei dem die wulstförmigen Abschnitte (25) nach dem Ziehschritt dem Biegen unterzogen werden, um die wulstförmigen Abschnitte (25) bezüglich des Wandkorpusabschnitts (6) zu biegen, um die geschwungenen Gehäuseabschnitte (7) durch die gebogenen wulstförmigen Abschnitte (25) zu bilden.

2. Verfahren nach Anspruch 1, wobei:
der Ziehschritt das Ausbilden jedes der wulstförmigen Abschnitte (25) an einer jeweiligen der rechten und linken Seite des Wandkorpusabschnitts (6) zu einer Form umfasst, die bei Verlauf nach außen in der Seitenrichtung der Fahrzeugkarosserie graduall nach unten ragt; und
der Biegeschritt das Festlegen einer Biegelinie (LM) zwischen dem Wandkorpusabschnitt (6) und jedem der wulstförmigen Abschnitte (25), um in der Seitenrichtung der Fahrzeugkarosserie schräg nach unten und nach innen zu verlaufen, und das Unterziehen der wulstförmigen Abschnitte (25) dem Biegen entlang entsprechender der Biegelinien (LM), um die geschwungenen Gehäuseabschnitte (7) durch die gebogenen wulstförmigen Abschnitte (25) zu bilden, umfasst.

3. Verfahren nach Anspruch 1 oder 2, wobei der Biegeschritt das Bilden mindestens eines Teils (12a, 15a) von mehreren Flanschen, die in dem Wandkorpusabschnitt (6) vorzusehen sind, gleichzeitig mit dem Biegen umfasst.

4. Verfahren nach Anspruch 1 oder 2, welches weiterhin nach dem Biegeschritt das Bilden eines Flansches (20) entlang eines Umfangsrands jedes der geschwungenen Gehäuseabschnitte (7) und das Bilden eines Flansches (8) mit einer gleichen Biegerichtung wie die des Flansches (20) des geschwungenen Gehäuseabschnitts (7) in dem Wandkorpusabschnitt (6) umfasst.

5. Verfahren nach einem der Ansprüche 1 bis 4, wobei:
das Formblech (21) aufweist: einen mittleren Abschnitt (26) zum Bilden des Wandkorpusabschnitts (6); ein Paar von seitlichen Abschnitten (27), die an jeweiligen der rechten und linken Seite an dem mittleren Abschnitt (26) vorgesehen sind und jeweils einen abstehenden Bereich (27a), der von einer von in Breitenrichtung entgegengesetzten Seiten des Formblechs bezüglich des mittleren Abschnitts (26) absteht, umfasst; und eine Aussparung (23), die zwischen dem Paar von abstehenden Bereichen (27a) ausgebildet ist,
wobei das Verfahren weiterhin die folgenden Schritte umfasst: Erzeugen eines streifenförmigen Rohmaterials (22), das zwei Reihen jeweils bestehend aus einer Längsserie der Formbleche (21) umfasst; und Schneiden des Formblechs (21) von dem Rohmaterial (22) in einer Positionsbeziehung, bei der die zwei abstehenden Bereiche (27a) von benachbarten der Formbleche (21) in einer der Reihen in der Aussparung (23) eines der Formbleche (21) in der anderen Reihe eingesetzt sind.

## Revendications

1. Méthode de formage d'un tableau de bord (1) qui possède une partie du corps de tableau (6) s'étendant dans un sens latéral d'une caisse de véhicule et une paire de parties incurvées en boîtier (7) chacune présente sur les côtés respectifs droit et gauche de la partie du corps de tableau (6) afin de définir une région arrière d'un passage de volant, en dessinant une plaque brute (21), **caractérisée en ce qu'**elle comprend :
une étape de dessin de soumission de la plaque brute (21) au dessin pour y former la partie du corps de tableau (6), et une paire de parties en forme bombée (25) situées sur les côtés respectifs droit et gauche de la partie du corps de tableau (6) en tant qu'éléments correspondants aux parties incurvées en boîtier (7) ; et
une étape de pliage de soumission des parties en forme bombée (25), après l'étape de dessin, au pliage pour plier les parties en forme bombée (25) par rapport à la partie du corps de tableau (6), afin de former les parties incurvées en boîtier (7) par les parties en forme bombée (25) pliées.

2. Méthode telle que définie dans la revendication 1, dans laquelle :
l'étape de dessin de soumission comporte le formage des parties du corps de tableau (6), sur les côtés respectifs droit et gauche de la partie du corps de tableau (6) afin d'obtenir une forme qui fait saillie progressivement vers le bas en s'étendant vers l'extérieur dans le sens latéral de la caisse de véhicule ; et
l'étape de pliage comporte la définition d'une ligne de pliage (LM) entre la partie du corps de tableau (6) et chacune des parties en forme bombée (25) afin de s'étendre obliquement vers le bas et l'intérieur dans la direction latérale de la caisse de véhicule, et la soumission des parties en forme bombée (25) au pliage le long d'une des ligne de pliage (LM) correspondantes afin de former les parties incurvées en boîtier (7) par les parties en forme bombée (25) pliées.

3. Méthode telle que définie dans les revendications 1 ou 2, dans laquelle l'étape de pliage comporte le formage d'au moins une partie (12a, 15a) de plusieurs brides devant être présentes dans la partie du corps de tableau (6) en parallèle avec le pliage.

4. Méthode telle que définie dans les revendications 1 ou 2, comprenant par ailleurs l'étape de formage d'une bride (20), après l'étape de pliage, le long d'une bordure périphérique de chacune des parties incurvées en boîtier (7) et de formage d'une bride (8) possédant le même sens de pliage que la bride de la partie incurvée en boîtier (7) dans la partie du corps de tableau (6).

5. Méthode telle que définie dans une quelconque des revendications 1 à 4, dans laquelle :
la plaque brute (21) possède : une partie centrale (26) destinée au formage de la partie du corps de tableau (6) ; une paire de parties latérales (27) présentes sur les côtés respectifs droit et gauche sur la partie centrale (26) et comportant chacune une région saillante (27a) faisant saillie à partir d'un des côtés opposés de la plaque brute dans le sens de la largeur par rapport à la partie centrale (26) ; et un ressort (23) défini entre la paire de régions saillantes (27a).
la méthode comprenant par ailleurs les étapes de : préparation d'un matériau brut en forme de bande (22) comportant deux rangées se composant chacune d'une série longitudinale des plaques brutes (21) ; et sectionnement de la plaque brute (21) à partir du matériau brut (22) dans une relation de position où les deux régions saillantes (27a) de celles adjacentes des plaques brutes (21) dans une des rangées sont montées dans le ressort (23) d'une des plaques brutes (21) dans l'autre rangée.
